# EUROPEAN PATENT APPLICATION

(11) **EP 4 118 979 A1**
(43) Date of publication of application: **18.01.2023**
(21) Application number: 21186100.0
(22) Date of filing: 16.07.2021
(51) Int. Cl.: A23L 19/00, A23L 7/126, A23L 7/196

(54) **A FOOD PRODUCT COMPRISING A BASE, A FOOD GRADE BINDER AND AT LEAST ONE GRAINY INGREDIENT, A METHOD AND A SYSTEM FOR MANUFACTURING SUCH A FOOD PRODUCT**

(71) Applicant: Scandir AB, 402 27 Göteborg (SE)
(72) Inventor: Hellwig, Coralie, 411 14 Göteborg (SE); Khanahmadi, Jalal, 402 27 Göteborg (SE); Amirmoezi, Amin, 402 27 Göteborg (SE); Lundgren, Mattias, 444 52 Stenungsund (SE); Taherzadeh, Esmaeil, 411 14 Göteborg (SE)
(74) Representative: AWA Sweden AB

(57) **Abstract**

The present invention relates to a method for manufacturing a food product (101), the method comprising the steps of:
a) providing a base (102) comprising at least one layer of sliced dehydrated fruit, sliced dehydrated vegetable or mixture thereof;
b) providing a food grade binder (104);
c) applying at least one grainy ingredient (103) to the base (102) thus obtaining a food product (101);
d) curing the food product (101) at a set of conditions.

## Description

### TECHNICAL FIELD

The present invention relates a food product comprising a base, a food grade binder and at least one grainy ingredient. The present invention further relates to a method and a system for manufacturing such a food product.

### BACKGROUND OF THE INVENTION

Awareness of dietary habits, in particular considering healthy and nutritious food products, is growing among the global population which has resulted in an ever-increasing interest in developing functional food products that are beneficial for health and well-being. Current dietary trends lean towards vegan and vegetarian diets which lead many to prefer covering their daily nutritional needs with products that contain, for example, vitamins, fibers, and fats that are plant-based. Further, functional food products that contain nuts are protein-rich, which makes these products highly suitable healthy food options.

The production of nutritious food products that are easily accessible to people has improved global dietary intakes. Yet, the number of people in the world who suffer from malnutrition or do not have access to diets that provide efficient nutrition is estimated to be one billion. Malnutrition can result in severe health problems such as developmental delays, impaired immune systems and bone and muscle related weaknesses.

The use of sliced dehydrated fruit and vegetable and nuts as ingredients in commercial human food is beneficial especially due to nutritional properties such as vitamins, fibers, fats and protein and the presence of amino acids essential to human health and well-being. In recent decades, however, food trends and choices leaned more towards highly processed and thus nutritionally compromised food products. In recent years, a growing demand for food products that are less processed and instead perceived natural or raw is culturally embedded in many places around the world.

Nuts have also been used as dairy product substitutes. Examples of this include cashew yogurt or milk. Nuts are also commonly used to make spreads, such as almond butter.

Other applications of sliced dehydrated fruit and vegetable and nuts include production of ingredients for food and beverage industries. Examples of food products that contain nuts and are currently available on the market are Kind^{®} bars and Nestle's Yes bar. Examples of snack food that contains sliced dehydrated fruit and/or vegetables and/or nuts include Eat Natural bars.

Drying is known to maintain nutritional functionalities of the fruit or vegetable that was dried. This method means that the fruit is often thick and chunky when it is used as an ingredient. Moreover, the fruit is often coated in additional sugar and preservatives such as sodium metabisulfites to prevent the growth of, for example, mold. Preservatives may also be used to keep the fruit and vegetables from discoloration.

Despite the availability of sliced dehydrated fruit, industrial application of it to be used as a base in food products is still unseen, given the problematic thickness and shriveled texture of conventional sliced dehydrated fruit. Moreover, a method to bind the sliced dehydrated fruit to the food products that it should cover as well as to decorate the covering layer of fruit with edible ingredients have not yet been solved for large-scale application. In particular, a major challenge with using sliced dehydrated fruit to cover food products in used to be the difficulties people experienced in biting through the sliced dehydrated fruit. Often the problem was that the slice of sliced dehydrated fruit would come off of the food it covered when a bite was taken which then resulted in the food product falling apart.

One currently pending patent application (BRP11105483) describes the use of visually attractive sliced dehydrated fruit and vegetables in a whole bar but does not specify whether the fruit is used to cover the bar. Moreover, sliced dehydrated fruit in food products is commonly arranged within the products. This means that the sliced dehydrated fruit has been chopped or diced into smaller pieces and added as an ingredient along with other ingredients used in these products. One patent application in this context is CN108174905, which covers a nut and sliced dehydrated fruit bar and production process thereof. However, the sliced dehydrated fruit is not sliced, but instead cut into small pieces. Another patent application for a fruit bar and making thereof centers around the use of diced sliced dehydrated fruit in the bar but not to cover the bar with (WO06124974). A recently published patent application for which an English translation is not available revolves around an energy bar that contains nuts and sliced dehydrated fruit (UA 140956). No information of the use of sliced dehydrated fruit to cover the bar or the use of sliced dehydrated fruit in the bar was presented in the information in English obtained for this patent application. Another patent application (CN109566998) that uses sliced dehydrated fruit and nuts in a bar does not show a bar that contains or is covered with sliced dehydrated fruit.

Food products that contain sliced dehydrated fruit and vegetables and nuts, such as granola or nut bars, are often offered as in-between-meal snacks. However, currently available food products of this kind are often high in sugar that is used as a binder and/or base, and low on the amount of fruit and vegetables. Alternative food products that contain more fruit and vegetables, and therefore have an overall improved nutritional profile are thus desired.

### SUMMARY OF THE INVENTION

In view of the above, the present invention provides a food product comprising sliced dehydrated fruit and/or sliced dehydrated vegetable as a base. Such a food product is visually attractive, has improved structural integrity and great taste. The present invention further comprises a method and system for manufacturing such a food product.

According to a first aspect, the present invention provides a method for manufacturing a food product. The method comprises the steps of:
a) providing a base comprising at least one layer of sliced dehydrated fruit, sliced dehydrated vegetable or mixture thereof;
b) providing a food grade binder;
c) applying at least one grainy ingredient to the base thus obtaining a food product;
d) curing the food product at a set of conditions.

The base may thus comprise sliced dehydrated fruit, sliced dehydrated vegetable or a mixture of sliced dehydrated fruit and sliced dehydrated vegetable. The at least one layer of sliced dehydrated fruit and/or sliced dehydrated vegetable may comprise one piece of sliced dehydrated fruit and/or sliced dehydrated vegetable, or a plurality of pieces of sliced dehydrated fruit and/or sliced dehydrated vegetable, depending on the size of each piece. Indeed, the size of each piece depends on the fruit or vegetable species that is used, and also on the slicing direction. Thus, if a banana is used as a fruit and is sliced transversally, substantially circular slices are obtained having a diameter of from 2 cm to 5 cm. On the other hand, if a banana is sliced vertically, substantially rectangular slices are obtained, having a length of from 10 cm to 30 cm, and a width of from 2 cm to 5 cm.

The base may be intermittent due to the size and natural variation of the pieces of the sliced dehydrated fruit and/or vegetable.

The thickness of each slice may be from 0.05 mm to 4 cm.

If a plurality of slices is used, the slices may be arranged flush or partially superposing. In order to improve structural integrity of the final food product, it is advantageous to arranged the slices in step a) such that the slices are superposed. The base provided in step a) may further comprise a plurality of layers of sliced dehydrated fruit, sliced dehydrated vegetable or mixture thereof.

By the term "dehydrated" is in the context of the present invention understood as having water content of below 45%.

Step a) includes cutting raw fruit and/or vegetables into slices of any desirable size and dehydrating it so that the slices do not shrivel, thus enabling the sliced dehydrated fruit and/or vegetables be used as the base. The fruit and vegetables can be dried in any desired way, including but not limited to sun drying, shade drying, microwave drying, freeze drying and vacuum drying. It should be noted that the slices remain substantionally the same thickness when freeze dryed, but shrinks in size in other drying processes. Gently drying the fruit and/or vegetables in ways that preserve nutritional benefits of the fruit maintains its functionality and health benefits.

It should be noted that the method of the present invention may comprise a step a") of pretreating fruit and/or vegetables. If present, step a") occurs before step a). Such a pretreating may be slicing, dicing, drying, boiling, steaming, soaking, chopping, mixing, crushing, peeling or any combinations thereof.

In step b), a food grade binder is provided. The food grade binder may be applied to the base and/or may be mixed with the at least one grainy ingredient. The food grade binder may be of any type known in the art. In particular, the food grade binder may comprise sugar, honey, nut butter, ground dehydrated fruit and ground dehydrated vegetable, fructose, other binders, stabilizers and gellifiers such as methylcellulose, starches, alginates, and combinations thereof. The food grade binder may be in the form of a syrup. Step b) may comprise processing the food grade binder by means such as blending, whisking, heating or cooling. In order to optimize the texture and taste of the final food product, it is preferred that the food grade binder is homogenous.

In particular, step b) may comprise mixing the at least one grainy ingredient with the food grade binder. Alternatively, or additionally, the food grade binder may be applied to the base.

The food grade binder may be applied to the base by any suitable method, such as by brushing, drizzling, sprinkling or the like.The amount of the food grade binder should be sufficient in order to provide adhering of the at least one grainy ingredient to the base, while not being too excessive such that the appearance of the food product is compromized, and the manufacturing cost is increased.

In the next step c), at least one grainy ingredient is applied to the base. By the term "grainy" is understood as consisting of or appearing to consist of granules, but also any shape or form including but not limited to powdered, whole or crushed. The at least one grainy ingredient may be legumes, seeds, nuts, minced fruit, vegetables, berries, cherry, sour cherry, grain, agronomic crops, fungi, and marine organisms. It should be noted that in step b), a mixture of at least two grainy ingredients may be provided.

The at least one grainy ingredient may be applied by any suitable means, such as by sprinkling or the like. If a plurality of grainy ingredients is used, the grainy ingredients may be premixed prior to step c). Alternatively, each grainy ingredient may be applied separately. As mentioned before, the at least one grainy ingredient may be mixed with the food grade binder before applying the at least one grainy ingredient to the base.

Finally, during step d), the food product is cured at a set of conditions. The set of conditions may comprise temperature, humidity and duration. In particular, step d) may be performed by any suitable method, such as cooling, refrigerating, heating, or in room temperature over a suitable span of time. The time required for step d) may vary from 2 minutes to 2 days, more preferably from 1 hour to 5 hours. The temperature required for step d) may vary from -70°C to 120°C, more preferably from -20°C to 20°C. Once the food products have been cured, food products are obtained that are covered on at least one side with sliced dehydrated fruit and/or sliced dehydrated vegetable. Controlled curing of food products in step d) enables the covering layer of sliced dehydrated fruit and/or sliced dehydrated vegetable to stick on the food products without falling off easily, and enabling the food products comprising the base of sliced dehydrated fruit and/or sliced dehydrated vegetable to be easily bitten off and chewed.

It is conceivable that the time period mentioned above comprises a plurality of time intervals, wherein the set of conditions is different during at least two time intervals. In particular, the temperature may be raised and lowered repeatedly during the time period of step d), e.g. such that the temperature has a first value during the first time interval, a second value during the second interval, a third value during the third time interval and so on. The duration of the time intervals may be same or different.

The set of conditions may be amended as a function of the value of the at least one parameter such as temperature. The term "as a function" in the context of the present invention is intended to mean that a change in the value of at least one parameter above a predefined threshold triggers an amendment in the set of conditions. In other words, if no change in the value of the at least one parameter is detected, or if the change is below the predefined threshold, the set of conditions may remain unamended.

The method of the present invention thus provides a simple and reliable way to manufacture a highly nutritional food product comprising a base comprising sliced dehydrated fruit, sliced dehydrated vegetables or mixture thereof.

The method of the present invention may comprise the step of:
e) applying at least one layer of sliced dehydrated fruit, sliced dehydrated vegetable or mixture thereof on the food product, wherein step e) occurs after step c).

In other words, at least one layer of sliced dehydrated fruit, sliced dehydrated vegetable or mixture thereof may be applied on the sides and/or the top of the food product. Such an embodiment offers the advantage of providing a food product having improved structural integrity. It should be noted that the same slice of dehydrated fruit and/or vegetable may be used both as the base and as the layer on the food product. In such an embodiment, the same slice of dehydrated fruit and/or vegetable may be used to completely wrap the food product.

The method of the present invention may comprise a step of:
f) cutting the food product in pieces having any desirable shape and size, wherein step f) occurs after step d).

The pieces into which the final product is cut may be any desirable size, and may be, for example, in the form of square or rectangular bites. The size of the bites may be selected such that the bite may be consumed by the user without biting.

The method according to the present invention may further comprise a step of:
g) applying a surface layer to the food product, wherein step g) occurs after step d).

The surface layer may comprise but is not tlimited to nut butter, fruit powder, yoghurt, chocolate or mixtures thereof. Further, the surface layer may comprise at least one decorating ingredient, such as nuts, chopped dehydrated fruit or vegetables, chopped chocolate or the like. The surface layer is preferably arranged for decorative purposes, but may also contribute to the structural integrity of the food product. The surface layer may further be used for introducing a logotype and/or a trade name on the food product.

It may be desired to prolong the shelf life of the food product. To this end, the method may further comprise a step of:
h) preserving the food product.

The step h) may comprise any type of preserving methods known in the art, and may comprise arranging the food product in a nitrogen sealed packaging. This may be achieved by creating a vacuum and then injecting nitrogen before the product packaging is sealed. It is also conceivable that step h) comprises a post- production sterilization procedure, e.g. pasteurization or microwave healing to yield a safe final food product with a long shelf life. Step h) may also comprise adding a preservative to the food product, such as sulfites, or the like. The preservative may be added to the at least one grainy ingredient and/or to the food grade binder.

The method of the present invention thus remedies the shortcomings of shriveled sliced dehydrated fruit and/or vegetables, by slicing and dehydrating until the moisture content is below 45%.

It should be noted that every step of the method described above may be performed either through human labor on a small scale and/or through the use of robots, manufacturing lines and/or artificial intelligence-assisted technologies in larger scale productions.

In order to provide adequate hygiene during manufacturing of food products that are covered with sliced dehydrated fruit and/or vegetables, human contact may be minimized. Therefore, the method of the present invention may further comprise step of robot-assisted technology such as but not limited to, for example, the loading and/or unloading of ingredients or the cured food products. By introduction of these steps, human-induced contamination is greatly reduced or even eliminated since the robots may be exclusively remotely controlled without interaction with the food processing area. By the term "robot" in the context of the present invention is understood a machine, especially one programmable by a computer, capable of carrying out a complex series of preferably mechanic actions automatically.

The present invention further relates to a food product comprising a base, at least one grainy ingredient and a food grade binder, wherein the food grade binder is arranged on the base and/or mixed with the at least one grainy ingredient, wherein the at least one grainy ingredient is arranged on the food grade binder and/or the base, and wherein the base comprises at least one layer of sliced dehydrated fruit, sliced dehydrated vegetable or mixture thereof.

The term "food product" in the context of the present invention refers to a food product that is suitable for human consumption.

The sliced dehydrated fruit or vegetable in step a) may be selected from a group consisting of fruit and residues and derivatives thereof, vegetables and residues and derivatives thereof, marine organisms and residues and derivatives thereof. The term "derivatives" includes extracts. Examples of vegetables include but are not limited to carrot, beetroot, sweet potato, pumpkin, parsnip, turnip, and celeriac. Examples of fruit include but are not limited to orange, banana, mango, kiwi, apple, peach, nectarine, apricot, fig, date, watermelon, melon, plum, or persimmon. Examples of marine organisms include but are not limited to algae, or the like.

As mentioned above, the at least one grainy ingredient may be legumes, seeds, nuts, fruit, vegetables, berries, cherry, sour cherry, grain, agronomic crops, fungi, and marine organisms.

Examples of legumes include but are not limited to soy, pea, or the like. Examples of derivatives and residuals of legumes including but not limited to lecithin, protein thereof, or the like.

Examples of seeds include but are not limited to cocoa, sunflower, flax, psyllium, pumpkins, or the like. Examples of derivatives or residuals of seeds include but are not limited to chocolate, cocoa butter, oil, or the like.

Examples of nuts include but are not limited to almonds, pistachios, walnuts, hazelnuts, peanuts, or the like. Examples of nut derivatives and residuals of nuts include but are not limited to oil, nut butter, or the like.

Fruit and vegetables being iused as at least one grainy ingredient may be the same as described above. Examples of derivatives and residuals of fruit and vegetables include but not limited to sliced dehydrated fruit and vegetables, ground or minced fruit and vegetables, extracts thereof, glucose, fructose, fibers, or the like.

Examples of grains include but are not limited to oats, rice, wheat, buckwheat, corn, or the like. Examples of precursors, derivatives or residuals of grains include but are not limited to granola, rolled oats, malt, dextrose, flour, or the like.

Examples of agronomic crops include but are not limited to sugar cane, or the like. Examples of precursors, derivatives or residuals of agronomic crops include but are not limited to sugar, molasses, or the like.

Example of marine organisms is spirulina powder.

Examples of fungi include but are not limited to filamentous fungi, or the like. Examples of precursors, derivatives or residuals of fungi include but are not limited to fungal-fermented substrates, mycoprotein, extruded and textured fungal derived products, or the like.

Examples of salt include but are not limited to sea salt, or the like. Examples of derivatives and residuals of salt include but are not limited to electrolytes, minerals, or the like.

Examples of flavors include but are not limited to natural or artificial vanilla, natural or artificial saffron, natural or artificial cinnamon, or the like, including precursors, derivatives and residuals thereof.

The at least one grainy ingredient may be a functional food, such as ginger.

The binder might comprise but not limited to sugar, honey, nut butter, ground dehydrated fruit and ground dehydrated vegetable, fructose, food grade binders such as methylcellulose, kappa carrageenan, starches, alginates and other binders, stabilizers and gellifiers, and combinations thereof.

The ingredients mentioned above may be used in combinations to achieve nutritious food products covered in sliced dehydrated fruit and/or vegetables. The ingredients mentioned above may be combined with each other, as mentioned above.

In particular, the grainy ingredient above may be a mixture containing precursors, derivatives or residuals of the above-mentioned ingredients. Further, the grainy ingredient may be a mixture comprising a combination of raw materials and precursors, derivatives and residuals of the above-mentioned ingredients. Such a substrate mixture is particularly suitable for functional food products.

The ratio between the base and the at least one grainy ingredient or vice versa may be from 1:1 to 1:9, more preferably from 1:2 to 1:8.

The food product may be of any suitable shape and size, such as cuboid, cylindrical, pyramidal or the like. According to the present invention, the food product is covered in sliced dehydrated fruit and/or vegetable on at least one side.

As mentioned above, the at least one grainy ingredient may be pre-mixed with the food grade binder before applying the at least one grainy ingredient to the food product. Alternatively, at least one grainy ingredient may already contain a sufficient amount of stickiness in order to enable the food product to maintain its structural integrity.

The food product according to the present invention may comprise at least one amino acid, at least one prebiotic substance, at least one probiotic substance, at least one mineral, at least one vitamin, at least one dietary fiber or combinations thereof. The amino acids may be one of the essential amino acids.

The probiotic substance may be good gut bacteria, e.g. Lactobacilii. The prebiotic substance may be L-carnitine, e.g. in the amount of 2-10% or 0.5-3 mg/L. The vitamin may be, for example, vitamin A, B and C, choline and combinations thereof. The mineral may be but are not limited to zinc, iron, manganese, sodium, phosphorus, and combinations thereof.

The food product of the present invention may contain polyunsaturated fatty acids like omega-3 and omega-6, and/or mobilized phenolic antioxidants. The functionality of the sliced dehydrated fruit and/or vegetable covered food products in the present invention is increased manyfold in terms of, for example, readily bioavailable minerals, soluble fibers, flavonoids, vitamins and antioxidant activity.

The food product according to the present invention is highly nutritious, tasty, and aesthetically appealing.

Finally, the present invention relates to a system for manufacturing a food product comprising a base, at least one grainy ingredient and a food grade binder, wherein the at least one grainy ingredient is arranged on the base, and wherein the base comprises at least one layer of sliced dehydrated fruit, sliced dehydrated vegetable or mixture thereof.

The system of the present invention comprises at least one curing reactor arranged for receiving the base, the at least one ingredient and the food grade binder. The curing reactor may have any suitable shape and size, depending on the desired production capacity and space available for the reactor. The term "reactor" encompasses a closed space such as a chamber or a room.

The at least one curing reactor may comprise at least one sensor being selected from a group comprising a temperature sensor, and a humidity sensor, and at least one curing surface.

The curing surface may be a table, countertop, tray, container, plate, or any type of box. The surface preferably comprises a bottom portion extending horizontally, and elevated edge portions extending vertically. The area of the bottom portion may be from 0.5 m² to 3 m². The vertical extension of the elevated edge portion may be from 0.5 cm to 50 cm. The shape of the bottom portion of the at least one curing surface may be circular, triangular, rectangular, or polygonal, and depends on the shape and size of the reactor. Alternatively, the curing surface may be a conveyor belt.

Preferably, the reactor comprises a plurality of surfaces. By the term "plurality" in the context of the present invention is understood at least two. The plurality of the surfaces is preferably arranged horizontally and in parallel to each other in a stacked manner. Alternatively, the plurality of the surfaces may be arranged vertically. The distance between each two surfaces may be from 5 mm to 50 cm. Each surface of the plurality of the surfaces may have the shape being same as or different from the shape of the other surfaces.

It should be noted that all of the steps a)-d) may occur on the at least one curing surface. Further, each of the steps e)-h) may be performed on the curing surface.

The system according to the present invention may further comprise a mixing chamber arranged for preparation of the food grade binder.

In order to increase production capacity of the system according to the present invention, the system may comprise a plurality of curing reactors, and a control unit arranged to independently monitor and control each curing reactor within the plurality of curing reactors. By operating a plurality of curing reactors in parallel separate disinfection procedures can be performed in the curing reactors that has been detected to have contamination without affecting an entire batch.

Further, the system according to the present invention may further comprise an after-treatment unit arranged downstream from the curing reactor. The after-treatment unit may be arranged for decorating and/or packaging the food product.

As mentioned above, it may be desired to minimize human interaction with the reactor in order to comply with excellent hygiene. To this end, the system of the present invention may further comprise a robot-assisted device arranged for performing at least one of steps a)-h) of the method described above.

### BRIEF DESCRIPTION OF THE DRAWINGS

Embodiments of the invention will now be described by way of example with reference to the accompanying drawings, of which:

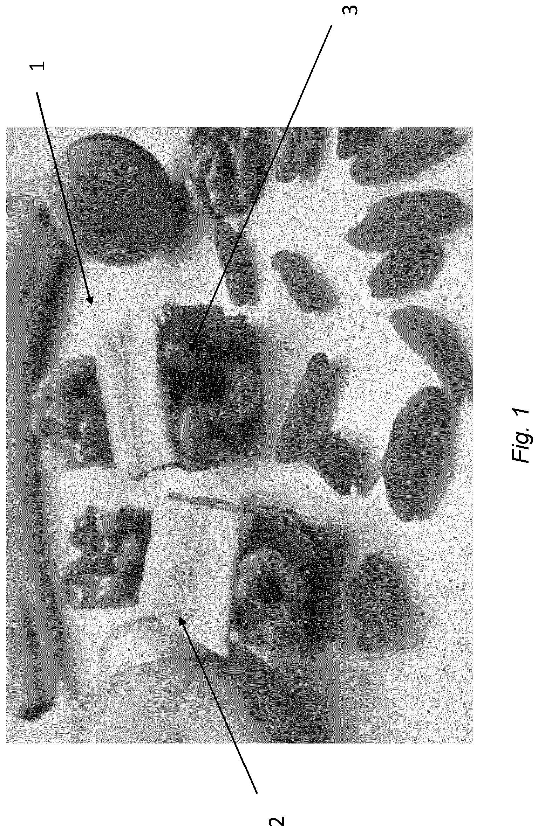

Figs. 1-3 illustrate different embodiments of the food product according to the present invention.

### DETAILED DESCRIPTION OF THE INVENTION

Fig. 1 illustrates a food product 1 according to the present invention. The food product 1 comprises a base 2 in the form of sliced dehydrated banana. The food product 1 further comprises two grainy ingredients 3 in the form of raisins and ground walnuts. The food product 1 further comprises a food grade binder arranged on the base 2. As may be seen in Fig. 1, the grainy ingredients 3 are arranged on the food grade binder. The food product 1 has a size being suitable to be consumed without biting, in the context of the present invention referred to as bite size.

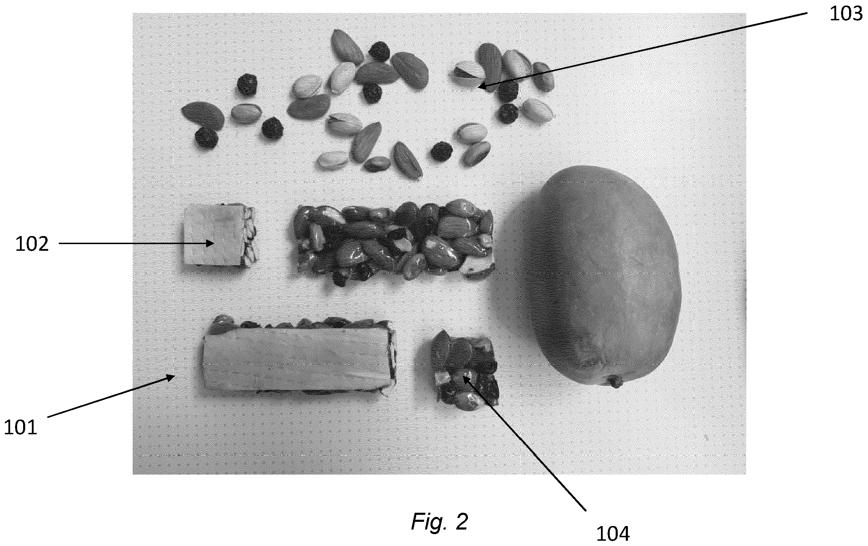

Fig. 2 depicts a food product 101 according to the present invention. The food product 101 comprises a base 102 in the form of sliced dehydrated mango. The food product 101 further comprises three grainy ingredients 103 in the form of pistachios, almonds and hazelnuts. The food product 101 further comprises a food grade binder 104 arranged on the base 102. As may be seen in Fig. 2, the grainy ingredients 103 have been premixed with the food grade binder 104, prior to being arranged on the food grade binder 104 applied to the base 102. The food product 101 is depicted in a bite size as well as in a bar size.

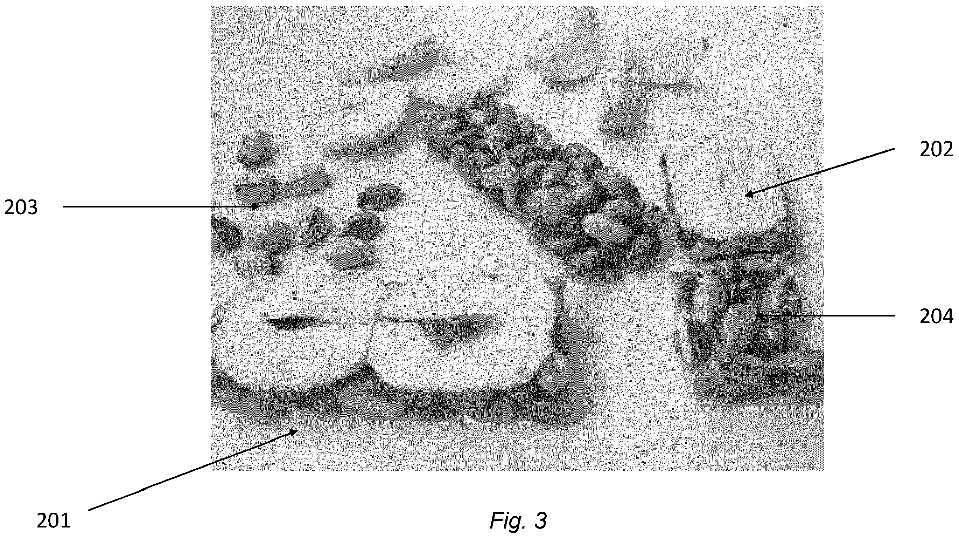

Finally, Fig. 3 shows a food product 201 according to the present invention. The food product 201 comprises a base 202 in the form of sliced dehydrated apple. As may be seen in Fig. 3, the base 202 is intermittent due to the shape and size of the pieces of the apple. The food product 201 further comprises two grainy ingredients 203 in the form of pistachios and almonds. The food product 201 further comprises a food grade binder 204 arranged on the base 202. As may be seen in Fig. 3, the grainy ingredients 203 have been premixed with the food grade binder 204, prior to being arranged on the food grade binder 204 applied to the base 202. The food product 201 is depicted in a bite size as well as in a bar size.

The food products depicted in Figs. 1-3 have been prepared by a method described below.

### Steps a") and a)

Fruits are cut into slices varying from 0.1 mm to 3 cm thickness, and dried until a moisture content of <45% is achieved. Once the desired moisture content is achieved, the sliced dehydrated fruit are layered on a curing surface thus obtaining the base of a layer of sliced fruit.

### Step b)

The ingredients for the food grade binder are combined and mixed thoroughly. The food grade binder is applied on the base. The food grade binder and the grainy ingredients are combined and stirred well.

### Step c)

The grainy ingredients premixed with the food grade binder are a poured onto the base.

### Step d)

The food product is left to set for at least 1 minute and more preferably for 2 to 6 hours at 10°C, more preferably around 12°C.

Although the present invention has been described with reference to various embodiments, those skilled in the art will recognize that changes may be made without departing from the scope of the invention. It is intended that the detailed description be regarded as illustrative and that the appended claims including all the equivalents are intended to define the scope of the invention.

## Claims

1. A method for manufacturing a food product (101), said method comprising the steps of:
a) providing a base (102) comprising at least one layer of sliced dehydrated fruit, sliced dehydrated vegetable or mixture thereof;
b) providing a food grade binder (104);
c) applying at least one grainy ingredient (103) to said base (102) thus obtaining a food product (101);
d) curing said food product (101) at a set of conditions.

2. The method according to claim 1, wherein said method comprises the step of:
e) applying at least one layer of sliced dehydrated fruit, sliced dehydrated vegetable or mixture thereof on said food product (101), wherein step e) occurs after step c).

3. The method according to any one of the preceding claims, said method further comprising a step of:
f) cutting said food product (101) in pieces having any desirable shape and size, wherein step f) occurs after step d).

4. The method according to any one of the preceding claims, wherein said method further comprises a step of:
g) applying a surface layer to said food product (101), wherein step g) occurs after step d).

5. The method according to any one of the preceding claims, said method comprising a step of:
h) preserving said food product (101).

6. The method according to any one of the preceding claims, wherein said step d) is cooling, refrigerating, heating or combinations thereof.

7. A food product (101) comprising a base (102), at least one grainy ingredient (103) and a food grade binder (104), wherein said at least one grainy ingredient (103) is arranged on said base (102), and wherein said base (102) comprises at least one layer of sliced dehydrated fruit, sliced dehydrated vegetable or mixture thereof.

8. The food product (101) according to claim 7, wherein said sliced dehydrated fruit is selected from orange, banana, mango, kiwi, apple, peach, nectarine, apricot, fig, date, watermelon, melon, plum, or persimmon.

9. The food product (101) according to claim 7 or 8, wherein said sliced dehydrated vegetable is selected from carrot, beetroot, sweet potato, pumpkin, parsnip, turnip, and celeriac.

10. The food product (101) according to any one of claims 7-9, wherein said at least one grainy ingredient (103) is selected from legumes, seeds, nuts, fruit, vegetables, berries, cherry, sour cherry, grain, agronomic crops, fungi, and marine organisms.

11. The food product according to any one of claims 7-10, wherein said food grade binder (104) comprises sugar, honey, nut butter, ground dehydrated fruit and ground dehydrated vegetable, fructose, food grade binders such as methylcellulose, kappa carrageenan, starches, alginates and other binders, stabilizers and gellifiers, and combinations thereof.

12. A system for manufacturing a food product (101) comprising a base (102), at least one grainy ingredient (103) and a food grade binder (104), wherein said at least one grainy ingredient (103) is arranged on said base (102), and wherein said base (102) comprises at least one layer of sliced dehydrated fruit, sliced dehydrated vegetable or mixture thereof, said system comprising:
at least one curing reactor arranged for receiving said base, said at least one grainy ingredient and said food grade binder, said at least one curing reactor comprising at least one curing surface.

13. The system according to claim 12, wherein said system further comprises a mixing chamber arranged for preparation of said food grade binder (104).

14. The system according to claim 12 or 13, wherein said system comprises an after-treatment unit arranged downstream from said curing reactor.

15. The system according to any one of claims 12-14, said system further comprising at least one sensor being selected from a group comprising a temperature sensor, and a humidity sensor.
